# EUROPEAN PATENT APPLICATION

(11) **EP 4 840 550 A1**
(43) Date of publication of application: **18.11.2026**
(21) Application number: 25219919.5
(22) Date of filing: 01.12.2025
(51) Int. Cl.: B05B 3/10, B05B 7/04, B05B 13/06, B05B 15/65

(54) **A NOZZLE FOR APPLYING COATING MATERIAL ONTO AN INNER SURFACE OF A PIPE, AND A PIPE REPAIR SYSTEM COMPRISING SUCH NOZZLE**

(30) Priority: 12.05.2025 CH 5122025
(71) Applicant: Camotec GmbH, 8917 Oberlunkhofen (CH)
(72) Inventor: The designation of the inventor has not yet been filed
(74) Representative: Körner, Thomas Ottmar

(57) **Abstract**

A nozzle unit for applying a liquid coating material onto an inner surface of a pipe comprises
**•** a body portion comprising a mixing space for receiving a first liquid ma-terial component and a second liquid material component which, when mixed together, form the liquid coating material;
**•** an at least partially hollow, rotatable shaft supported by a bearing pro-vided in the body portion with the rotatable shaft extending at least par-tially into, in particular through, the mixing space;
**•** said rotatable shaft comprising a liquid inlet through which liquid coat-ing material may flow from the mixing space into an interior space of the rotatable shaft;
**•** a spray head provided at a distal end of the rotatable shaft and config-ured to receive liquid coating material flowing through interior space of the hollow shaft from the liquid inlet towards its distal end in a down-stream direction, said spray head comprising a liquid outlet for dis-charging liquid coating material, in particular at least essentially in a radial direction;
**•** coupling means for connecting the rotatable shaft to driving means, in particular to a flexible shaft, configured to rotate the rotatable shaft about an axis of rotation.

## Description

### TECHNICAL FIELD

The invention pertains to the field of pipe maintenance and repair. It relates, in particular, to a nozzle for applying coating material onto an inner surface of a pipe and a pipe repair system comprising such nozzle in accordance with the independent patent claims.

### TECHNICAL BACKGROUND

In the prior art, it is known to repair holes and cracks in pipes, such as water pipes, waste pipes, ventilation pipes, by applying a coating (also referred to as lining) to an inner surface and/or inner wall of the pipes, thus restoring, renovating and/or rejuvenating the pipes. This is sometimes referred to as relining of pipes. The process is frequently used to repair pipes arranged underground or inside construction elements such as walls thereby avoiding replacement of worn-out pipes or pipe sections which would be costly and cumbersome.

The prior art includes various devices for applying such an (internal) coating to the inner wall of a pipe. US 5,951,761 discloses such a prior art device which includes a nozzle for spraying coating material in a liquid state onto the inner wall of the pipe. To warrant a substantially uniform coating, in particular coating thickness, the nozzle may be rotated about an axis parallel to a centre axis of the pipe to be coated. The nozzle has the shape of a truncated cone and includes an inner space to which a coating material is delivered. The nozzle further includes radially directed apertures. Upon rotation of the nozzle the centrifugal force generated by the rotation of the nozzle will throw the coating material out from the inner space through the apertures and towards the inner wall of the tube.

A flexible shaft comprising a casing, in particular a jacket, and a core, in particular an elongated flexible member, driven by driving means may be used for rotating the nozzle, but also for retracting the nozzle through the piping and/or the pipe.

After the liquid coating material has been applied, one must wait for it to harden and/or cure before a further coating layer may be applied and/or the pipe may be used again as designated, i.e. for supplying or discharging water, air, or gas. It is therefore desirable that hardening and/or curing takes place without significant delay once the liquid coating material has been applied to the inner wall - ideally within a few to several minutes. However, when working with liquid coating materials that cure so quickly, there is a risk that some of the liquid coating material may cure inside the nozzle or even in supply conduits, in particular supply tubes, through which liquid coating material may flow from a supply to the nozzle. This may lead to partial or even complete clogging of the nozzle and/or the supply conduit, which in turn may lead to extensive interruptions of the repair operation (inter alia for cleaning and or replacing nozzle, supply conduit etc.), and/or to destruction of the nozzle and/or the supply conduit.

It has therefore been suggested to supply a (liquid) coating material precursor (which may be thought of as an actual liquid coating material) and a curing agent as separate components to the nozzle, and only mix them inside the nozzle and/or shortly before they exit the nozzle. EP 2 626 142 A1 proposes another nozzle for applying a lining material onto an inner surface of a pipe. Said nozzle comprises a stationary part and a rotational member which may be rotated relative to the stationary part. Said stationary part comprises a radially inner space for receiving the lining material, said radially inner space having an axial extension, wherein the radially inner space is enclosed by a circumferentially and axially extending surface, with outlet portions arranged in said surface to allow lining material to leave the radially inner space in at least a radially outward direction. The nozzle further comprises a number of distribution members arranged radially outside and circumferentially distributed about the radially inner space, with the rotational member extending axially through the radially inner space and connected to said distribution members for rotation thereof wherein said distribution members are arranged to rotate about the radially inner space such that each distribution member during rotation passes by the first and second outlet portions and receives lining material leaving the radially inner space. The nozzle also comprises a mixing space for receiving at least a first and a second material component and being arranged to mix said material components to form the lining material.

One potential drawback of this design is that a size, in particular a diameter and/or extensions in the radial direction, of the nozzle may not be decreased below a given limit. This is owed to the fact that the portion of the rotational member which extends axially through the radially inner space needs to have a minimum diameter and/or cross section to provide a required mechanical stability, a wall on which the circumferentially and axially extending surface is formed needs to have a minimum thickness for the same reason, and additional radial space is required for accommodating the distribution members, which also need to have minimum dimensions for reasons of mechanical stability etc., and need to be radially separated from the (outside) surface of the wall. In addition, a (remaining) space between the portion of the rotational member which extends axially through the radially inner space and the circumferentially and axially extending surface also needs to have a minimum radial dimension to allow for the lining material, which normally has a relatively high viscosity of generally more than 50 mPa · s, and frequently in a range between 100 mPa · s and 1000 mPa · s.

While waste pipes and ventilation pipes generally have sufficiently large diameters, in particular of more than 50mm (and possibly significantly more), supply pipes, in particular for water and other liquids, gas or pressurized air, may have diameters of less than 50mm, and often less than 25.4 mm or 20mm. Repairing such supply pipes using prior art nozzles may be difficult. Even if the nozzle is sufficiently small and/or thin to physically fit inside the pipe, good uniformity of the coating may be the more difficult to achieve the smaller a distance between an outer perimeter of the nozzle and an inner surface (of a wall) of the pipe is. This may inter alia be due to the fact that nozzle and/or a rotating portion thereof like e.g. the rotational member may come in contact with the inner surface of the pipe, in particular at or near (sharp) bends in the pipe, and/or due to vibrations of the nozzle or its rotating portion which may occur during operation.

Physical contact of the (rotating) rotational member and/or distribution members connected thereto with the inner wall or inner surface of the pipe may lead to plastic deformation of the rotational member and/or distribution members, and/or to abrasion of a material the rotational member and/or the distribution members are formed of. In severe cases, this may damage the rotational member and/or distribution members, and render replacement necessary. Even in less severe cases, however, a (spatial) distribution characteristic of the nozzle may be changed, leading to and/or increasing a non-uniformity in the application of the (liquid) coating or lining material. Such physical contact may also degrade and/or damage a previously applied coating layer, which may in particular have been applied in a previous coating stage of a multistage coating process. Such a a multistage coating process may allow for a thicker coating to be applied while maintaining sufficient coating uniformity, in particular constant coating thickness.

It has been observed by the applicant that vibrations as mentioned further above may in particular occur when a relatively long flexible shaft is used for rotating the nozzle or its rotating portion, in particular when the flexible shaft has a length of more than 10 meters, in particular several tenths of meters. Such vibrations may include and/or cause precession of the of the nozzle, its rotating portion and/or the respective axis of rotation, as exemplary described in Wikipedia article "Precession" in its version as edited at 21:34, 15 January 2025, to be found at https://en.wikipedia.orq/w/index.php?title=Precession&oldid=1269682062.

It has further been observed by the applicant that vibrations as described above may lead to oscillations or other temporal variations of a speed of rotation of the nozzle or its rotating portion. In extreme cases, the speed of rotation may even decrease to at least approximately zero for short instances, in particular in a sub-second range. As will be apparent to a person skilled in the art, this may be detrimental to coating uniformity, in particular as relatively more liquid coating material may be applied at a first circumferential position on the inner surface and/or inner wall of the pipe, while relatively less liquid coating material may be applied at a second circumferential position at a circumferential distance from the first circumferential position on the inner surface and/or inner wall of the pipe due to such variations in speed of rotation.

It is thus an objective of the invention to overcome the disadvantages and shortcomings as laid down above.

### SUMMARY OF THE INVENTION

The above objective and other objectives may be solved by a nozzle unit for applying coating material onto an inner surface of a pipe and/or a pipe repair system comprising such nozzle unit in accordance with the independent patent claims.

A nozzle unit for applying coating material onto an inner surface of a pipe, tube, hose or other (fluid) conduit in accordance with an aspect of the invention as hereinafter claimed may comprise features of claim 1 below.

The nozzle unit may comprise a body portion, which may be configured to be advanced and/or retracted through and/or along a pipe, in particular by means of and/or with the aid of a flexible shaft attached and/or connected to the body portion, wherein said flexible shaft may in particular push or pull the body portion along an inside and/or interior space of the pipe, and also around bends, curves joints, and/or past bifurcations in the pipe. Here and in what follows, the term "pipe" shall be understood to comprise any type of tube, hose or other (fluid) conduit. The body portion may be at least essentially cylindrical, and/or have an at least essentially cylindrical outer surface and/or envelope, and/or may at least essentially be rotationally symmetric with respect to an axis of rotation, R. Said axis of rotation, R, may be parallel to and/or coincide with a longitudinal and/or axial direction of the nozzle unit, the rotatable shaft, and/or the spray head. While being advanced and/or retracted through and/ or along a pipe, the body portion may be maintained at an approximately central position within the pipe, in particular with respect to a cross section of the pipe, by means of flexible support members extending radially from the body portion and/or the rotatable shaft to engage with the inner wall of the pipe in an analogous manner as the support members exemplary described in EP 2 626 142 A1. Alternatively or in addition, one more centering members as exexemplary described in US 5,951,761 may be provided on the body portion and/or the flexible shaft, in particular proximal to a location where the latter is attached and/or connected to the body portion. Said support members and/or centering members may also maintain the body portion in an orientation in which the axis of rotation, R and/or the longitudinal and/or axial direction of the nozzle unit is at least approximately parallel to a local longitudinal and/or axial direction of the pipe.

The body portion may comprise a mixing space, which may be configured to receive first and second, in particular liquid, material components, which, when at least partially mixed together, form a liquid coating material which may be applied, in particular sprayed, sprinkled and/or sputtered, onto an inner surface of the pipe to be restored. At least two (separate) supply conduits may be provided in the body portion through which the material components may flow and or be pumped or otherwise conveyed into the mixing space. The liquid coating material may be capable of hardening or curing and/or being hardened and/or cured and may thus form a solid coating on said inner surface. The first material component may comprise a prepolymer or a polymer precursor, in particular a monomer, which may polymerize or be polymerized, thus forming an at least essentially solid (plastic) material. The first material component may in particular comprise an epoxy resin. The second material component may comprise a curing or hardening agent that may initiate and/or accelerate hardening and/or curing of the prepolymer or polymer precursor comprised by the first material component. The curing or hardening agent may, in particular, comprise a catalyst, in particular suitable for accelerating and/or enhancing polymerization.

The body portion may further comprise one or more bearings, in particular ball bearings, for rotatably bearing an at least partially hollow shaft, in particular an at least partially hollow rotatable shaft, thus allowing the hollow shaft to rotate and/or be rotated around an axis of rotation R, which may coincide with a longitudinal axis of said rotatable shaft, and may define an axial direction. The rotatable shaft may in particular be removable, and may be removed from the body portion, in particular to allow for cleaning and/or replacement of the rotatable shaft, and/or for servicing the bearings.

A distal end of the rotatable shaft (when inserted into the body portion) may protrude from and/or extend beyond a first and/or distal end of the body portion, in particular in parallel and/or along a longitudinal axis of the body portion, which may coincide with the axis of rotation, R. A proximal end of the rotatable shaft may be located between the first and/or distal end of the body portion and a second and/or proximal end thereof, and may be located inside body portion. Alternatively, the proximal end of the rotatable shaft may protrude from and/or extend beyond a second and/or proximal end of the body portion.

One or more liquid inlets may be formed in the rotatable shaft, which liquid inlet may allow for liquid coating material to flow from an outside of the rotatable shaft to the interior space of the rotatable shaft. The liquid inlet(s) may be provided at or near the proximal end of the rotatable shaft. The liquid inlet(s) may be located inside the mixing space (as long as the rotatable shaft is inserted into the body portion). The liquid inlet(s) may be formed in a side wall of the rotatable shaft which circumferentially encloses and/or surrounds the interior space. Alternatively, the rotatable shaft may be open at its proximal end, with the interior space extending from the proximal end towards the distal end, in particular up to the distal end, with the liquid inlet being formed at and/or by the open proximal end.

A shaft seal and/or other type of seal, washer or gasket may be provided, in particular between the mixing space and the bearing(s), to seal off the mixing space, in particular from the bearing(s).

The interior space may extend along a longitudinal axis of the rotatable shaft from the liquid inlet towards and at least close to - and in particular up to - the distal and of the rotatable shaft. The rotatable shaft may be open at its distal end.

Stirring means may be provided on, as part of and/or (detachably) connected to the rotatable shaft and configured to extend into the mixing space. The stirring means may be configured to rotate with the rotatable shaft and support and/or improve mixing of the first and second, in particular liquid, material components. The stirring means may be configured to convey the first and/or second, in particular liquid, material components into the mixing space, and/or to convey the (mixed) liquid coating material towards a spray head, which may be formed at, provided at and/or (detachably) attached to the distal end of the rotatable shaft, and/or may form the distal end of the rotatable shaft, and/or through one or more liquid outlets comprised by the spray head. The stirring means may, in particular, comprise a propeller having a plurality of blades which extend into the mixing space. The blades may be shaped to direct first and/or second, in particular liquid, material components from the supply conduits towards the liquid inlet(s).

Stirring means configured to not only stir the first and/or second, in particular liquid, material components and/or the liquid coating material in the mixing space, but also to convey them into the mixing space and/or towards the spray head, in in particular from the supply conduits towards the liquid inlet(s) offer a number advantages: To begin with, they may obviate a need for separate supply pumps otherwise required to convey the first and second, in particular liquid, material components from respective supplies, in particular supply containers, towards the nozzle unit and/or apply liquid coating material to the inner surface of the pipe. In addition, it has been observed that a uniformity of coatings applied and/or formed may be increased by using a nozzle unit comprising such stirring means, which may at least partially be owed to the fact that a flow rate of liquid coating material discharged through the liquid outlet(s) may change correspondingly or commensurate with variations and/or fluctuations in the speed of rotation of the rotatable shaft and/or the spray head. Last but not least it has been observed that, when the stirring means are configured to direct first and/or second, in particular liquid, material components from the supply conduits towards the liquid inlet(s), a tendency of the liquid coating material to harden inside the nozzle unit may be reduced.

The spray head may be formed integrally with the rotatable shaft. Alternatively, the spray head may be provided as a separate element or part which may be detachable from the rotatable shaft and may in particular be rotatably connected to the body portion through the rotatable shaft. A detachable spray head allows for more easy and efficient cleaning of both the rotatable shaft and the spray head, and/or for replacement of (only) said detachable spray head. The detachable spray head may temporarily and/or reversibly be attached and/or secured to the rotatable shaft, e.g. by means of a bayonet lock. The detachable spray head may comprise a cylindrical portion which may be put on and/or slipped over the distal end of the rotatable shaft to attach the spray head to the rotatable shaft.

The spray head may comprise the liquid outlet(s) through which liquid coating material may be discharged to be sprayed, sprinkled and/or sputtered onto the inner surface of the pipe. The (detachable) spray head, in particular the liquid outlet(s), may be in fluid communication with the interior space of the rotatable shaft, in particular through the (open) distal end of the rotatable shaft.

A maximum diameter d of the spray head may be smaller, in particular less than 80% or less than 50%, of a maximum diameter D of the body portion. This may efficiently prevent the (rotating) spray head from coming into physical contact with the inner surface of the pipe to be restored or with a coating layer formed on said inner surface, in particular when the nozzle unit is retracted through the pipe with the spray head trailing behind the body portion while the liquid coating material is applied, and/or if an axial extent and/or an extent or dimension in an axial direction perpendicular of the spray head and/or a length of the distal end of the rotatable shaft protruding from and/or extending beyond a first and/or distal end of the body portion is sufficiently small. Appropriate and/or optimum relative dimensions may easily be determined by experiment and/or geometric analysis.

The spray head may comprise deflection means configured to redirect and/or disperse at least some of the liquid coating material discharged through the liquid outlet(s), in particular by redirecting at least some liquid coating material in a direction opposite the flow direction and/or by dispersing at least some coating material with respect to the axial and/or a circumferential direction. The deflection elements may allow for a more uniform distribution of (liquid) coating material on the inner wall of the pipe, and thus for achieving a more uniform coating thickness.

The nozzle unit may further comprise coupling means for connecting the at least partially hollow, rotatable shaft to driving means, in particular to a flexible shaft, said driving means being configured to rotate the rotatable shaft about the axis of rotation. The coupling means may be part of the rotatable shaft, and may in particular comprise a connector provided at or near the proximal end of the rotatable shaft, to which connector the flexible shaft, in particular a core of the flexible shaft, may be coupled, attached, connected, and/or secured. Alternatively, the coupling means may be provided as part of the body portion and/or separate from the rotatable shaft, and may be connected to the rotatable shaft through transmission means configured to transmit a rotation of the (core of) the flexible shaft to the rotatable shaft. The coupling means or the transmission means may comprise a receptacle, socket or other kind of fixture, which may be formed at the proximal end of the rotatable shaft, to which the core of the flexible shaft may be coupled, e.g. by means of a press fit, to transmit rotation. Alternatively or in addition, the transmission means may, in particular, comprise cogwheels, gears and/or transmission belts configured to transmit rotation. Employing transmission means may allow to provide the liquid inlet at the proximal end of the rotatable shaft as described above.

A drive unit for a flexible shaft with a core and a casing (not covered as such by the literal scope of the claims) may comprise a motor, in particular an electric motor, for setting and maintaining the core of the flexible shaft in(to) rotation, and may thus be employed in connection with the nozzle unit as described above, in particular for rotating the rotatable shaft, thus effecting the spray head to spin and/or revolve.

The drive unit may comprise a first connector to which the core may be attached, in particular in a defined and/or fixed angular position with respect to a circumferential direction. The first connector may comprise a receptacle, socket or other kind of fixture, which may be formed at a distal end of the connector, to which the core of the flexible shaft, in particular a proximal end of the shaft, may be coupled to transmit rotation from the first connector to the core.

The first connector may be provided and/or formed at a distal end of the drive shaft. The drive shaft may in particular be the axis of the motor, in particular of a rotor of the motor. Alternatively, the drive shaft may be provided separately and/or separably from the motor, but rigidly coupled to the motor so that rotation of its motor may be transmitted to the drive shaft.

The drive unit may further comprise a second connector to which the case of the flexible shaft may be connected, coupled and/or attached, in particular by means of a ferrule provided at the proximal end of the flexible shaft.

In accordance with an aspect of the invention, a distance in a direction parallel to the axis of rotation between the first connector and the second connector may be varied, in particular during operation of the drive unit, i.e. while the first connector and the drive shaft are and remain in rotation. This will allow for uninterrupted rotation of the core of the flexible shaft while the distance is being varied.

The drive unit may comprise a housing, with the motor being disposed inside the housing, and the second connector being provided on an outside of a wall of the housing. The second connector and/or the housing may comprise a passage, lead-trough, bushing or similar, through which the core of the flexible shaft, in particular the proximal end of the core, may be led into an inside of the housing, and or the distal end of the drive shaft may be lead out of the housing.

The distance in the direction parallel to the axis of rotation between the first connector and the second connector may in particular be varied by shifting the drive shaft forward or backwards in said direction, and thus respectively towards or away from the second connector. This may be achieved by displacing the motor, in particular by shifting the motor forward or backwards in said direction, in particular when the drive shaft is comprised by the motor. To facilitate shifting of the motor, said motor may bear on and/or be supported by one or more rails, which may in particular be provided inside the housing, in particular on a bottom of the housing.

A handle, lever or similar may be provided for displacing the motor and/or the drive shaft in the direction parallel to the axis of rotation, in particular from an outside of the housing. Fixation means may further be provided for temporarily and/or releasably locking the handle, lever etc. at a fixed and/or defined position, thus establishing a fixed and/or defined distance between the first connector and the second connector.

An elastic element, in particular a spring, may be provided in effective connection with both the first connector and the second connector, and may be configured to push or pull the first and second connector away from one another, in particular relative to the axis of rotation.

Alternatively or in addition, an actuator may be provided for varying, changing, setting and/or controlling the distance between the first connector and the second connector, in particular by varying, changing, setting and/or controlling a position of the drive shaft and/or the motor. The actuator may comprise a linear motor and/or a solenoid, and may, in particular, allow for desired force to be applied to act between the first connector and the second connector, and for varying, changing, setting and/or controlling said force.

A pipe repair system for applying a liquid lining material onto an inner surface of a pipe in accordance with an aspect of the invention as hereinafter claimed may comprise features of claim 9 below.

The pipe repair system may in particular comprise a nozzle unit as described above and a drive unit as described above; a flexible shaft having a proximal end coupled to the drive unit and a distal end coupled to the nozzle unit, thus configured to transmit rotation from the drive unit, in particular the motor comprised by the drive unit, to the spray head of the nozzle unit; and a liquid material supply configured to provide the first liquid material component and the second, in particular liquid, material component to the mixing space of the nozzle unit.

The liquid material supply may comprise first and second supply containers for storing and or supplying first and second liquid material components. The liquid material supply may further comprise a first and a second supply hose in fluid connection with the first and the second container, respectively, through which first and liquid material components may flow and or be pumped from their respective supply containers to the mixing space. First and a second supply hoses may respectively be connected and/or attached to first and second hose fittings which may be provided on the body portion of the nozzle unit, which hose fittings are in fluid connection with the mixing space through first and second supply conduits, respectively, which may be provided in the body portion.

The liquid material supply may further comprise first and second pumps for pumping first and liquid material components from the respective supply containers to the nozzle unit, in particular the mixing space.

The liquid material supply may further comprise a supply drum onto/from which flexible wave and/or first and second supply hoses may be wound/unwound as the nuzzle unit is retracted/advanced through the pipe, e.g. as exemplary described in US 5,951,761. A drum motor may be provided for operating the drum.

The pipe repair system may further comprise sensing means, in particular a vibrometer, for measuring vibrations of the nozzle unit and/or the rotatable shaft; and/or measuring means, in particular comprising a tachometer, configured to measure and/or determine a speed of rotation of the motor, the rotatable shaft and/or the spray head, and/or a (statistical) dispersion, in particular a variance and/or fluctuation of said speed of rotation. Sensing means and/or measuring means may at least partially be comprised by the nozzle unit. Quantities measured and/or determined by means of the sensing means and/or the measuring means may be used for supervising and/or in controlling various operations of the pipe repair system, in particular through one or more control systems comprised by the pipe repair system.

To begin with, closed loop control as for example described in Wikipedia article https://en.wikipedia.org/w/index.php?title=Closed-loop_controller&oldid=1277060911 may be applied to control the speed of rotation of the motor, the rotatable shaft and/or the spray head, wherein a(n electric) power, voltage and/or current supplied to the motor may be used as manipulated variable and/or system input.

Closed loop control may also be employed to minimize vibrations of the nozzle unit, in particular the rotatable shaft and/or the spray head, wherein a(n electric) power, voltage, current and/or the speed of rotation of the motor, the rotatable shaft and/or the spray head may be used as manipulated variable and/or system input. In the latter case, nested control loops may be employed with an inner control loop controlling the peed of rotation, and an outer control loop controlling the vibrations. An allowable range for the speed of rotation may be provided as a boundary condition.

Closed loop control may similarly be employed to minimize the (statistical) dispersion, in particular the variance and/or fluctuation of the speed of rotation of the motor, the rotatable shaft and/or the spray head may, wherein a(n electric) power, voltage, current and/or the speed of rotation of the motor, the rotatable shaft and/or the spray head may be used as manipulated variable and/or system input. In the latter case, nested control loops may be employed with an inner control loop controlling the peed of rotation, and an outer control loop controlling the vibrations. An allowable range for the speed of rotation may be provided as a boundary condition.

Vibrations and/or (statistical) dispersion may be minimized by determining and/or choosing an acceptable threshold, and subsequently selecting a value below such threshold as set value or reference value for the control loop.

The speed of rotation of the motor, the rotatable shaft and/or the spray head as measured or determined may also be used to adapt, in particular by the control system, flow rates of the first and second liquid material components and/or the liquid coating material in relation to, in particular correspondingly or commensurate with, changes and fluctuations of said speed, which will allow to increase a coating uniformity.

The speed of rotation of the motor, the rotatable shaft and/or the spray head as measured or determined may also be used to adapt, in particular by the control system, a speed with which the nozzle unit is advanced along or retracted through the pipe in relation to, in particular correspondingly or commensurate with, changes and fluctuations of said speed, which will also allow to increase a coating uniformity.

Preferred embodiments and/or variations of the invention as hereinafter claimed are presented in dependent claims.

### BRIEF DESCRIPTION OF THE DRAWINGS

The subject matter of the invention will be explained with respect to further optional detail in the following text with reference to further exemplary embodiments which are illustrated in the attached drawings.
Fig 1 shows an exemplary nozzle unit in accordance with the invention as hereinafter claimed;
Fig. 2 shows a side view and a sectional view of the nozzle unit as shown in Fig. 1;
Fig. 3 illustrates a rotatable shaft as comprised by the nozzle unit as shown in Figs. 1 and 2;
Fig. 4 illustrates a spray head as comprised by the nozzle unit as shown in Figs. 1 and 2;
Fig. 5 shows an exemplary drive unit for being used with the invention as hereinafter claimed.

### DETAILED DESCRIPTION OF EXEMPLARY EMBODIMENTS

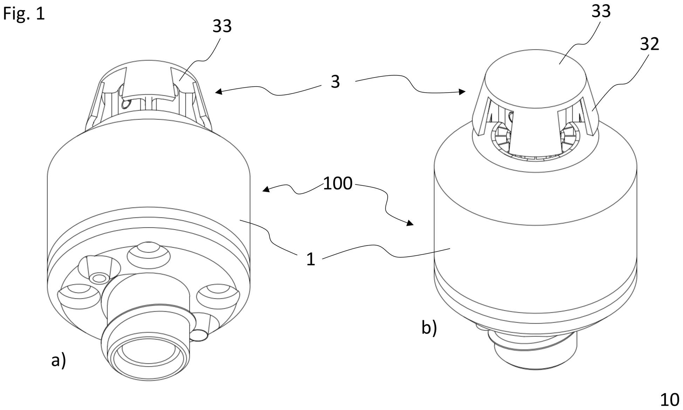

Fig. 1a) shows perspective views of an exemplary nozzle unit 100 in accordance with the invention as hereinafter claimed as seen from a first viewpoint; Fig. 1b) shows the same nozzle unit 100 as seen from a second viewpoint. The nozzle unit comprises a body portion 1 with a mixing space 11, a partially hollow, rotatable shaft 2 inserted and extending through the body portion, with a spray head 3 attached to a distal end of the rotatable shaft 2.

First and second ball bearings 12, 12' are provided in the body portion for bearing the rotatable shaft 2. A first hose fitting 13 and a second hose fitting 13' in fluid communication with the mixing space, in particular through first and second supply conduits, are also provided as part of the body portion to allow for first and second, in particular liquid, material components, respectively, to be supplied to the mixing space 11, in particular through first and second supply hoses connected to first hose fitting 13 and a second hose fitting 13', respectively.

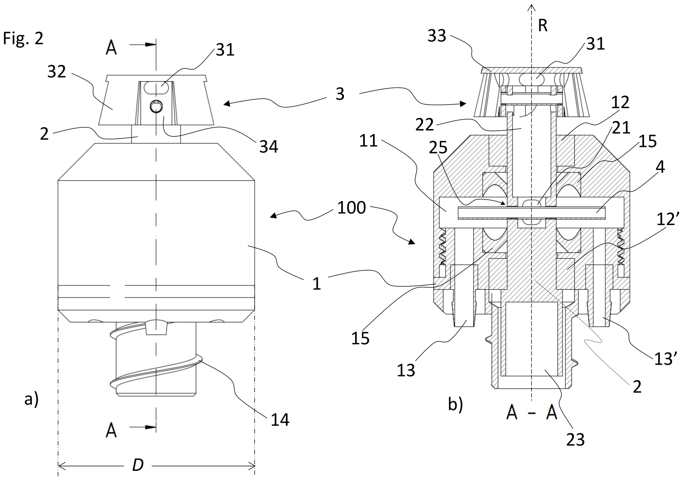

Fig. 2a) shows a side view of the nozzle unit 100 from Fig. 1; Fig. 2b) a sectional view. A thread 14 is provided on the body portion 1 for connecting and/or securing a (distal end of) a casing of a flexible shaft (not shown in the Figures) to the body portion. Two shaft seals 15 provided to seal mixing space 11 off from the ball bearings 12, 12'. Stirring means are provided in form of a stirring element 4 which is inserted into the rotatable shaft 2 through bores 25 provided in the rotatable shaft, and which extends into the mixing space and through the rotatable shaft, in particular through an interior space 22 of said rotatable shaft, in a radial direction. It has been observed that a tendency of a liquid coating material (formed by at least partial mixing of the first and second, in particular liquid, materials in the mixing space) to harden inside the nozzle unit may be reduced when the mixing element extends through the interior space.

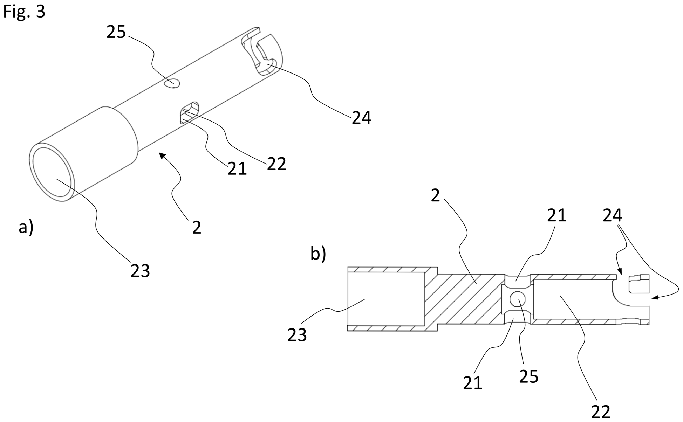

Fig. 3a) shows a perspective view, Fig. 3b) a sectional view of the rotatable shaft 2 as comprised by the nozzle unit from Figs. 1 and 2, with the interior space 22 and coupling means 23 for connecting the rotatable shaft to driving means, in particular a core of the flexible shaft, and/or vice versa. Liquid inlets 21 are provided in a section of a (cylindrical) wall surrounding the interior space 22 of the rotatable shaft 2. A (static part) of a bayonet lock 24 is provided at the distal end of the rotatable shaft 2.

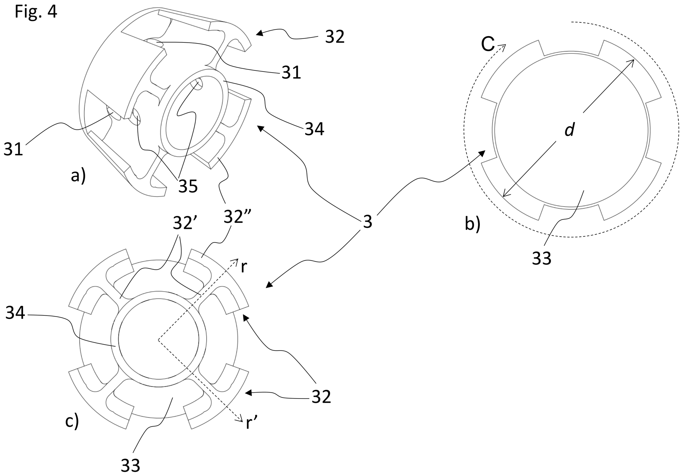

Fig. 4a) shows a sectional view of a (detachable) spray head 3 as comprised by the nozzle unit as shown in Figs. 1 and 2. Fig. 4b) shows a top view of the spray as seen when looking towards the body portion 1 of the nozzle unit with the spray head attached to the rotatable shaft 2; Fig. 4c) shows a bottom view of the spray head as seen when looking from the body portion 1 towards the spray head attached to the body portion. An essentially disc-shaped cap element 33 is provided at and/or forms the distal end of the spray head facing away from the body portion 1. Four deflection elements 32, in particular their respective distal ends, adjoin the cap element, in particular a bottom and/or body-portion-facing side of the cap element. Between two adjacent deflection elements, in particular between any two adjacent deflection elements, a liquid outlet is provided, which may adjoin the cap element. Cap element and deflection elements may be formed integrally and/or in one piece. First portions 32' of the deflection elements are formed on an outside surface of a cylindrical portion 34 of the spray head. Second portions 32" of the deflection elements are formed at distal ends of the first portions 32' at a distance from the outside surface of the cylindrical portion 34. Second portions 32" of neighboring deflection elements are disposed at a distance from one another with respect to a circumferential direction C. This way, a passage, in particular a slit-shaped passage, for liquid coating material is formed between second portions 32" of neighboring deflection elements.

Bores 35 provided in the spray head, in particular opposite from on another in the cylindrical portion 34, may allow for a pin to be fitted in each bore and/or through both bores, which pin(s) may interact with (the static part of) bayonet lock 24 to secure the spray head 3 when attached to the distal end of the rotatable shaft 2, and/or prevent rotation of the spray head 3 relative to the rotatable shaft. A spring (not shown in the Figures), in particular a helical spring, may be provided within interior space 22. An axis of the helical spring may be orientated at least essentially parallel to the axis of rotation R, with a length of the spring with a length of the spring chosen such that it will push the spray head in a direction away from the body portion, and/or at least essentially in the direction of axis of rotation R, thus securing the bayonet lock.

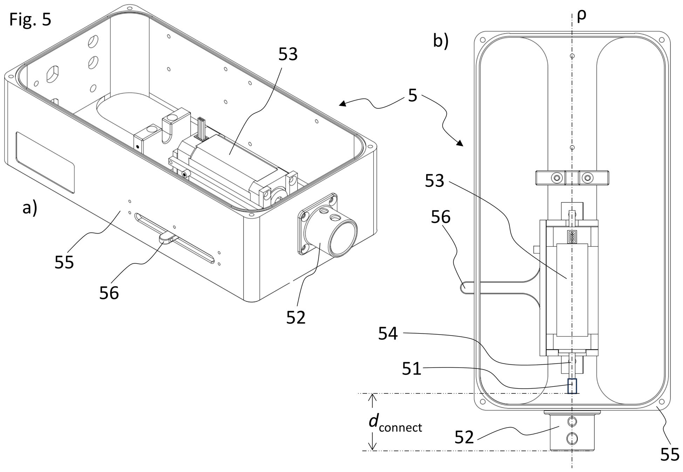

Fig. 5 shows an exemplary drive unit for use with the invention as hereinafter claimed, comprising a first connector 51 configured for a core of a flexible shaft to be attached thereto a second connector 52 configured for a casing of said flexible shaft to be attached thereto; and a(n electric) motor 53 configured to rotate the first connector about an axis of rotation ρ, wherein a distance *d*_{connect} between the first connector and the second connector in a direction parallel to the axis of rotation may be varied, in particular by varying a distance between the motor 53 and the second connector 52. The motor may be borne by a rail to allow for simple and/or accurate displacement. The motor may be designed to rotate at speeds between 0 and 14000 rpm, wherein a desired speed and direction (clockwise/counterclockwise) of rotation may be selected and/or controlled.

This description and any accompanying drawings that illustrate aspects and embodiments of the present invention should not be taken as limiting the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the scope of this description and the claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different and/or individual embodiments as described above and below. Embodiments in accordance with the invention may, in particular, include further and/or additional features, elements, aspects, etc. not shown in the drawings or described above.

The disclosure also covers all further features shown in any Figure, individually, although they may not have been described in the afore or following description. Also, individual alternatives of the embodiments described in any Figure and the description and individual alternatives of features thereof can be disclaimed from the subject matter of the invention or from disclosed subject matter. The disclosure comprises subject matter consisting of the features defined in the claims or the exemplary embodiments as well as subject matter comprising said features.

The present disclosure also includes embodiments with any combination of features which are mentioned or shown above and/or below, in various embodiments or variants. It also includes individual features as shown in the Figures, even if they are shown there in connection with other features and/or are not mentioned above or below. The disclosure comprises embodiments which exclusively comprise the features described in the claims or the exemplary embodiments, as well as those which comprise additional other features. The steps of any method disclosed above or claimed below may preferably be carried out according the order in which they are presented, but may also be carried out in a different order.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "substantially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

As used herein, the terms "first", "second", and "third" may be used interchangeably to distinguish one component from another and are not intended to signify location or importance of the individual components.

Unless stated otherwise, it shall be assumed throughout this entire document that a statement *a* ≈ *b* may imply that |*a-b*|/(|*a*|+|*b*|) < 0.2, preferably |*a*-*b*|/(|*a*|+|*b*|) < 0.05, wherein a and b may represent arbitrary quantities, parameters and/or variables as described and/or defined anywhere in this document, or as otherwise known to a person skilled in the art. Further, a statement that a is at least approximately equal or at least approximately identical to b may imply that *a* = *b*, and not exclude that *a* = *b*. Further, unless stated otherwise, throughout this entire document, a statement *a* » *b* may imply that *a* > 5*b*, preferably *a* > 10*b*; and statement *a* « *b* may imply that 5a < b, preferably 10*a* < *b.* A statement that a is significantly larger than b may imply that a >> *b.* A statement that a is significantly smaller than *b* may imply that *a* « *b.*

All documents, in particular all patent documents and Wikipedia articles, referred to in this patent application are hereby included by reference in their entirety.

Preferred embodiments of the present invention, in particular as described above, may be realized as detailed in the numbered variants and/or embodiments in accordance with the items listed below, advantageously in combination with one or more of the features as detailed above, or in accordance with the claims as presented further below.
1. A nozzle unit 100 for applying a liquid coating material onto an inner surface of a pipe, comprising
   a. a body portion 1 comprising a mixing space 11 for receiving a first liquid material component and a second liquid material component which, when mixed together, form the liquid coating material;
   b. an at least partially hollow, rotatable shaft 2 supported by a bearing provided in the body portion with the rotatable shaft extending at least partially into, in particular through, the mixing space;
   c. said rotatable shaft comprising a liquid inlet 21 through which liquid coating material may flow from the mixing space into an interior space 22 of the rotatable shaft;
   d. a spray head 3 provided at a distal end of the rotatable shaft and configured to receive liquid coating material flowing through interior space of the hollow shaft from the liquid inlet towards its distal end in a flow direction, said spray head comprising a liquid outlet 31 for discharging liquid coating material, in particular at least essentially in a radial direction;
   e. coupling means 23 for connecting the rotatable shaft to driving means, in particular to a flexible shaft, configured to rotate the rotatable shaft about an axis of rotation (R).
2. The nozzle unit of embodiment 1, wherein the spray head 3 comprises deflection means 32, 33 configured to disperse and/or redirect at least some of the discharged liquid coating material, in particular in a direction opposite the flow direction.
3. The nozzle unit of any preceding embodiment, wherein the spray head 3 is detachably mounted to or at a distal end of the rotatable shaft 2, in particular with a cylindrical portion 34 of the spray head fitted to, put on and/or slipped over the distal end of the rotatable shaft.
4. The nozzle unit of any preceding embodiment, comprising at least one further liquid outlet 31, wherein all liquid outlets are arranged at the same axial position.
5. The nozzle unit of any preceding embodiment, wherein the deflection means comprise a cap element 33 formed at a distal end of the spray unit, in particular adjacent and/or adjoining the one or more liquid outlets 31.
6. The nozzle unit of any preceding embodiment, wherein the deflection means comprise at least one, in particular a plurality of, deflection element(s) 32, each of which extends in both a radial (r, r') and an axial (R) direction, in particular with said deflection elements being uniformly distributed with respect to a circumferential direction (C).
7. The nozzle unit of any preceding embodiment, wherein each deflection element 32 comprises
   a. a first portion 32' extending in both a radial direction (r, r') and an axial direction (R); in particular with said radial direction orientated in a different direction perpendicular to the axial direction (R) for each deflection element, and
   b. a second portion 32" extending in both the axial direction and a circumferential direction (C); in particular with
   c. the first portion
      i. formed on an outside surface of the rotatable shaft, in particular with a proximal end of the first portion in contact with the outside surface; or
      ii. attached to or connected with an outside surface of the rotatable shaft at a proximal end of the first portion, in particular with the first portion formed on the cylindrical portion 34 of the spray head;
      and, in particular, with
   d. the second portion formed at, attached to and/or connected with a distal end of the first portion.
8. The nozzle unit of any preceding embodiment, wherein each deflection element 32 has an at least essentially T-shaped cross section in a plane perpendicular to the axis of rotation (R).
9. A drive unit 5 for a flexible shaft, said flexible shaft comprising a core and a casing, said drive unit comprising:
   a. a first connector 51 configured for the core to be attached thereto;
   b. a second connector 52 configured for the casing to be attached thereto;
   c. a motor 53, in particular an electric motor, configured to rotate the first connector about an axis of rotation (ρ); characterized in that
   d. a distance (*d*_{connect}) between the first connector and the second connector in a direction parallel to the axis of rotation may be varied; in particular while the first connector is being rotated by the motor.
10. The drive unit according to embodiment 9, wherein the first connector is formed at a distal end of a drive shaft 54 comprised by the motor or coupled to the motor, in particular at a proximal end of the drive shaft.
11. The drive unit according to any preceding embodiment, wherein a distance between the motor 53 and the second connector 52 may be varied in a direction parallel to the axis of rotation may be varied to vary the distance between the first connector 51 and the second connector.
12. The drive unit according to any preceding embodiment, further comprising a housing 54 in which the motor is disposed, and wherein the second connector is disposed on a wall of said housing.
13. The drive unit according to any preceding embodiment, further comprising at least one rail for bearing the motor 53.
14. The drive unit according to any preceding embodiment, further comprising means for varying the distance between the first connector and the second connector, in particular an elastic element connected to the first connector and/or the second connector and, in particular, configured to exert a force adapted to increase said distance.
15. The drive unit according to any preceding embodiment, further comprising an actuator, in particular a linear motor, for varying the distance between the first connector and the second connector, in particular for varying, setting and/or controlling a position of the motor with respect to a direction parallel to the axis of rotation (p).
16. The drive unit according to any preceding embodiment, further comprising a handle 56 or lever for displacing the motor and/or the drive shaft in the direction parallel to the axis of rotation.
17. A pipe repair system for applying a liquid lining material onto an inner surface of a pipe, comprising:
   a. a nozzle unit 100 according to one of embodiments 1 to 8;
   b. a drive unit 5, in particular according to one of embodiments 9 to 16;
   c. a liquid material supply configured to provide the first liquid material component and the second, in particular liquid, material component to the mixing space 11.
18. The pipe repair system according to embodiment 17, further comprising sensing means, in particular a vibrometer, for measuring vibrations of the nozzle unit and/or the rotatable shaft; said sensing means in particular being comprised by said nozzle unit.
19. The pipe repair system according to any preceding embodiment, further comprising a control system, in particular a closed-loop control system, configured to control, in particular to minimize, vibrations of the nozzle, in particular by manipulating a setting of the actuator of the drive unit, in particular to set and/or change a force exerted by the actuator.
20. The pipe repair system according to any preceding embodiment, further comprising measuring means, in particular comprising a tachometer, configured to measure and/or determine a speed of rotation of the motor 53, the rotatable shaft 2 and/or the spray head 3, and/or a statistical dispersion, in particular a variance and/or fluctuation thereof.
21. The pipe repair system according to embodiment 20, further comprising a control system, in particular a closed-loop control system, configured to control, in particular to minimize, a statistical dispersion, in particular a variance and/or fluctuation of a speed of rotation of the motor 53, the rotatable shaft 2 and/or the spray head 3, in particular by manipulating a setting of the actuator, in particular to set and/or change a force exerted by the actuator.

## Claims

1. A nozzle unit (100) for applying a liquid coating material onto an inner surface of a pipe, comprising
a. a body portion (1) comprising a mixing space (11) for receiving a first liquid material component and a second liquid material component which, when mixed together, form the liquid coating material;
b. an at least partially hollow, rotatable shaft (2) supported by a bearing provided in the body portion with the rotatable shaft extending at least partially into, in particular through, the mixing space;
c. said rotatable shaft comprising a liquid inlet (21) through which liquid coating material may flow from the mixing space into an interior space (22) of the rotatable shaft;
d. a spray head (3) provided at a distal end of the rotatable shaft and configured to receive liquid coating material flowing through interior space of the hollow shaft from the liquid inlet towards its distal end in a flow direction, said spray head comprising a liquid outlet (31) for discharging liquid coating material, in particular at least essentially in a radial direction;
e. coupling means (23) for connecting the rotatable shaft to driving means, in particular to a flexible shaft, configured to rotate the rotatable shaft about an axis of rotation (R).

2. The nozzle unit of claim 1, wherein the spray head (3) comprises deflection means (32, 33) configured to disperse and/or redirect at least some of the discharged liquid coating material, in particular in a direction opposite the flow direction.

3. The nozzle unit of any preceding claim, wherein the spray head (3) is detachably mounted to or at a distal end of the rotatable shaft (2), in particular with a cylindrical portion (34) of the spray head fitted to, put on and/or slipped over the distal end of the rotatable shaft.

4. The nozzle unit of any preceding claim, comprising at least one further liquid outlet (31), wherein all liquid outlets are arranged at the same axial position.

5. The nozzle unit of any preceding claim, wherein the deflection means comprise a cap element (33) formed at a distal end of the spray unit, in particular adjacent and/or adjoining the one or more liquid outlets (31).

6. The nozzle unit of any preceding claim, wherein the deflection means comprise at least one, in particular a plurality of, deflection element(s) (32), each of which extends in both a radial (r, r') and an axial (R) direction, in particular with said deflection elements being uniformly distributed with respect to a circumferential direction (C).

7. The nozzle unit of any preceding claim, wherein each deflection element (32) comprises
a. a first portion (32') extending in both a radial direction (r, r') and an axial direction (R); in particular with said radial direction orientated in a different direction perpendicular to the axial direction (R) for each deflection element, and
b. a second portion (32") extending in both the axial direction and a circumferential direction (C); in particular with
c. the first portion
i. formed on an outside surface of the rotatable shaft, in particular with a proximal end of the first portion in contact with the outside surface; or
ii. attached to or connected with an outside surface of the rotatable shaft at a proximal end of the first portion, in particular with the first portion formed on the cylindrical portion (34) of the spray head;
and, in particular, with
d. the second portion formed at, attached to and/or connected with a distal end of the first portion.

8. The nozzle unit of any preceding claim, wherein each deflection element (32) has an at least essentially T-shaped cross section in a plane perpendicular to the axis of rotation (R).

9. A pipe repair system for applying a liquid lining material onto an inner surface of a pipe, comprising:
a. a nozzle unit (100) according to one of claims 1 to 8;
b. a drive unit (5) for a flexible shaft; said flexible shaft in particular comprising a core and a casing, said drive unit in particular comprising:
i. a first connector (51) configured for the core to be attached thereto;
ii. a second connector (52) configured for the casing to be attached thereto;
iii. a motor (53), in particular an electric motor, configured to rotate the first connector about an axis of rotation (ρ); **characterized in that**
iv. a distance (*d*_{connect}) between the first connector and the second connector in a direction parallel to the axis of rotation may be varied; in particular while the first connector is being rotated by the motor.
c. a liquid material supply configured to provide the first liquid material component and the second, in particular liquid, material component to the mixing space (11).

10. The pipe repair system according to claim 9, further comprising sensing means, in particular a vibrometer, for measuring vibrations of the nozzle unit and/or the rotatable shaft; said sensing means in particular being comprised by said nozzle unit.

11. The pipe repair system according to any preceding claim, further comprising a control system, in particular a closed-loop control system, configured to control, in particular to minimize, vibrations of the nozzle, in particular by manipulating a setting of an actuator, in particular a linear motor, comprised by the drive unit, in particular to set and/or change a force exerted by the actuator, wherein the actuator is configured to vary the distance between the first connector and the second connector, in particular for varying, setting and/or controlling a position of the motor with respect to a direction parallel to the axis of rotation (ρ)

12. The pipe repair system according to any preceding claim, further comprising measuring means, in particular comprising a tachometer, configured to measure and/or determine a speed of rotation of the motor (53), the rotatable shaft (2) and/or the spray head (3), and/or a statistical dispersion, in particular a variance and/or fluctuation thereof.

13. The pipe repair system according to claim 12, further comprising a control system, in particular a closed-loop control system, configured to control, in particular to minimize, a statistical dispersion, in particular a variance and/or fluctuation of a speed of rotation of the motor (53), the rotatable shaft (2) and/or the spray head (3), in particular by manipulating a setting of the actuator, in particular to set and/or change a force exerted by the actuator.
